# EUROPEAN PATENT SPECIFICATION

(11) **EP 2 847 937 B1**
(45) Date of publication and mention of the grant of the patent: **10.07.2019**
(21) Application number: 13787645.4
(22) Date of filing: 07.05.2013
(51) Int. Cl.: H04L 12/26, H04W 24/10, H04B 7/02, H04W 72/08

(54) **METHOD AND SYSTEM FOR REPORTING FEEDBACK IN COOPERATIVE MULTIPOINT TRANSMISSION**
VERFAHREN UND SYSTEM ZUR RÜCKKOPPLUNGSMELDUNG IN DER KOOPERATIVEN MEHRPUNKTÜBERTRAGUNG
PROCÉDÉ ET SYSTÈME POUR SIGNALER UNE RÉTROACTION DANS UNE TRANSMISSION MULTIPOINT COOPÉRATIVE

(30) Priority: 08.05.2012 US 201261644381 P
(43) Date of publication of application: 18.03.2015
(73) Proprietor: Marvell World Trade Ltd., St. Michael 14027 (BB)
(72) Inventor: GOMADAM, Krishna Srikanth, San Jose, California 95112 (US)
(74) Representative: Grünecker Patent- und Rechtsanwälte PartG mbB
(86) International application number: PCT/IB2013/053646
(87) International publication number: WO 2013/168081

(56) References cited:
- WO-A1-2012/028204
- WO-A2-2011/034321
- WO-A2-2011/085230
- US-A1- 2009 190 528
- US-A1- 2010 238 821
- US-A1- 2011 188 393
- US-A1- 2011 249 643
- US-A1- 2011 249 643
- US-A1- 2012 020 230
- US-B2- 8 478 190
- US-B2- 8 538 482

## Description

### FIELD OF THE DISCLOSURE

The present disclosure relates generally to wireless communication, and particularly to methods and systems for coordinated transmission.

### BACKGROUND

In some Multiple-Input Multiple-Output (MIMO) communication systems, multiple cells use Cooperative Multipoint (CoMP) transmission schemes for coordinating downlink MIMO transmissions to User Equipment (UEs). Third Generation Partnership Project (3GPP) Long Term Evolution - Advanced (LTE-A) systems, for example, use or contemplate the use of multiple CoMP modes such as Dynamic Point Selection (DPS), Dynamic Point Blanking (DPB), Cooperative Beamforming (CB) and Joint Processing (JP). CoMP operation in LTE-A are specified, for example, in "3rd Generation Partnership Project; Technical Specification Group Radio Access Network; Coordinated multi-point operation for LTE physical layer aspects (Release 11)," 3GPP TR 36.819, September, 2011.

The description above is presented as a general overview of related art in this field and should not be construed as an admission that any of the information it contains constitutes prior art against the present patent application.

US 2011/0188393 A1 describes techniques for reporting channel information. In one aspect, a plurality of channel information reporting modes are available to a user equipment (UE) for reporting channel information for coordinated multi-point (CoMP) data transmission. The UE may determine a first channel information reporting mode to use, determine first channel information related to at least one cell in a CoMP measurement set of the UE, and send the first channel information in accordance with the first channel information reporting mode to one or more cells in the CoMP measurement set. The UE may also determine a second channel information reporting mode to use, determine second channel information related to multiple cells in the CoMP measurement set, and send the second channel information in accordance with the second channel information reporting mode. A plurality of channel feedback configurations may be supported, including a single-stage, a two-stage, and/or a one-shot channel configurations.

WO 2012/028204 A1 discloses a technique which is intended for use in multiple-input multiple-output (MIMO) wireless communication systems of the kind which have a plurality of adjacent cells, each containing one or more base stations operable to transmit signals to, and receive signals transmitted from, one or more user equipments. The user equipments are operable to feed back to the relevant base station(s) channel state information relating to channel(s) between the relevant base station(s) and the user equipments, and the base stations are operable to adapt signals for transmission to user equipments, based on the fed back channel state information. The technique involves identifying uplink resources for a user equipment-initiated channel state message, the user equipment judging a need for a user equipment-initiated channel state message based on information not available to the network, and the user equipment sending the user equipment-initiated channel state message to the network using the identified uplink resources. The user equipment-initiated channel state message may be a CSI report or a request to change a CSI reporting rate, reporting rate or reporting mode.

WO 2011/085230 A2 relates to channel state information transmission for multiple carriers, whereby channel state information is reported in periodic and aperiodic reports for multiple component carriers or serving cells. Channel state information may be reported for a subset of aggregated downlink carriers or serving cells. For an aperiodic report, the carrier(s)/serving cell(s) for which channel state information is reported are determined based on the request for the aperiodic report. When a CQI/PMI/RI report and a HARQ ACK/NACK report coincide in a subframe, the HARQ ACK/NACK report is transmitted on PUCCH, and the CQI/PMI/RI report is transmitted on PUSCH.

WO 2011/034321 A2 is directed to a technique for transmitting uplink control information through a Physical Uplink Shared Channel (PUSCH) at a user equipment, including receiving configuration information for periodic PUSCH transmission through a first protocol layer signaling, receiving information indicating activation or deactivation of the periodic PUSCH transmission through a second protocol layer signaling, wherein the second protocol layer is lower than the first protocol layer, and periodically transmitting the uplink control information through the PUSCH according to the configuration information if the periodic PUSCH transmission is activated.

US 2011/0249643 A1 introduces techniques for periodically reporting channel state information (CSI) on protected and unprotected resources. The protected resources may include resources in which transmissions in a first cell are protected by restricting transmissions in a second cell.

In a typical Cooperative Multipoint (CoMP) scheme, a group of cooperating cells configures downlink transmissions to mobile communication terminals (referred to generally as "terminals") based on channel feedback that is reported by the terminals. Since each terminal reports CoMP feedback for multiple channels, the size of the CoMP feedback is often large and requires considerable uplink bandwidth.

### SUMMARY

It is the object of the invention to provide improved techniques for providing channel feedback in CoMP communication systems that enable a terminal to transmit channel feedback for multiple CoMP channels with small uplink overhead and little or no performance degradation.

This object is solved by the subject matter of the independent claims. Preferred embodiments are defined by the dependent claims.

The embodiments and/or examples of the following description which are not covered by the appended claims are considered as not being part of the present invention.

An embodiment provides a method that includes receiving, in a communication terminal, signals from a group of cells. The group of cells cooperates in a Coordinated Multipoint (CoMP) transmission scheme that assigns multiple Channel State Information Reference Signals (CSI-RS) resources to the cells. A first subset of the CSI-RS resources is assigned to periodically report channel feedback on a first uplink channel, and a second subset of the CSI-RS resources is assigned to a-periodically report the channel feedback on a second uplink channel. The channel feedback is computed for the multiple CSI-RS resources. The channel feedback computed for the CSI-RS resources is transmitted in the first subset on the first uplink channel, and the channel feedback computed for the CSI-RS resources in the second subset is transmitted on the second uplink channel.

Another embodiment provides an apparatus including a receiver, processing circuitry and a transmitter. The receiver is configured to receive signals from a group of cells, wherein the group of cells cooperate in a Coordinated Multipoint (CoMP) transmission scheme that assigns multiple Channel State Information Reference Signals (CSI-RS) resources to the cells. The processing circuitry is configured to assign a first subset of the CSI-RS resources to periodically report channel feedback on a first uplink channel, assign a second subset of the CSI-RS resources to a-periodically report the channel feedback on an second uplink channel, and compute the channel feedback for the multiple CSI-RS resources. The transmitter is configured to transmit the channel feedback computed for the CSI-RS resources in the first subset on the first uplink channel, and to transmit the channel feedback computed for the CSI-RS resources in the second subset on the second uplink channel.

### BRIEF DESCRIPTION OF THE DRAWINGS

The present disclosure will be more fully understood from the following detailed description of the embodiments thereof, taken together with the drawings in which:
Fig. 1 is a block diagram that schematically illustrates a Cooperative Multipoint (CoMP) communication system, in accordance with an embodiment; and
Fig. 2 is a flow chart that schematically illustrates a method for providing channel feedback in a CoMP communication system, in accordance with an embodiment.

### DETAILED DESCRIPTION OF EMBODIMENTS

Embodiments that are described herein provide techniques for providing channel feedback in CoMP communication systems (also referred to herein as "CoMP feedback"). In the disclosed embodiments, the cooperating cells are assigned multiple Channel State Information Reference Signals (CSI-RS) resources. Each CSI-RS resource corresponds to one or more cells, which transmit a respective unique Reference Signal (RS) that is measured by the terminals. A terminal measures the downlink signals per CSI-RS resource, computes channel feedback based on the signal measurements, and transmits the channel feedback to the cells.

In some embodiments, a terminal is configured to periodically transmit part of the channel feedback over a periodic control channel, and a-periodically transmit part of the channel feedback over an a-periodic channel. In LTE and LTE-A, for example, the periodic control channel comprises a Physical Uplink Control Channel (PUCCH) and the a-periodic channel comprises a Physical Uplink Shared Channel (PUSCH). The description that follows refers to PUCCH and PUSCH, for the sake of clarity. In alternative embodiments, however, any other suitable channel types can be used.

In some embodiments, the terminal is configured to transmit the channel feedback for a first subset of the CSI-RS resources over PUCCH, and a second (possibly overlapping) subset of the CSI-RS resources over PUSCH. Several example methods for of assigning CSI-RS resources to PUCCH and PUSCH are described herein. Various techniques for formatting the channel feedback are also described.

For example, in some embodiments the channel feedback is encoded independently per CSI-RS resource, whereas in other embodiments the channel feedback is encoded jointly for multiple CSI-RS resources. In some embodiments the channel feedback for different CSI-RS resources is time-multiplexed over multiple PUCCH transmissions. In this mode, different CSI-RS resources may be assigned different periodicities.

The feedback schemes described herein exploit the different characteristics of the periodic PUCCH and a-periodic PUSCH, and enable the terminal to transmit channel feedback for multiple CoMP channels with small uplink overhead and little or no performance degradation.

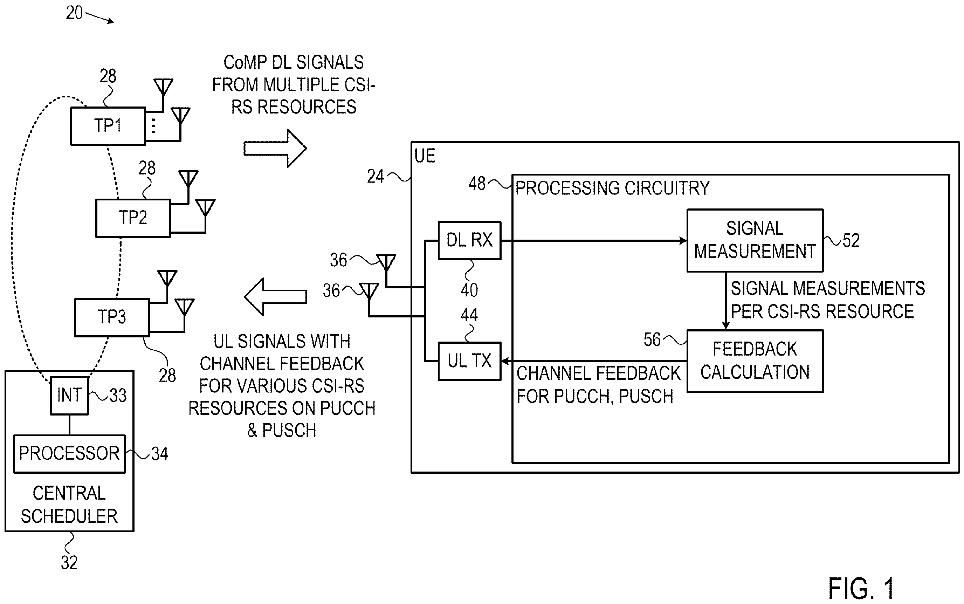

Fig. 1 is a block diagram that schematically illustrates a Cooperative Multipoint (CoMP) communication system 20 that uses Multiple-Input Multiple-Output (MIMO) transmission, in accordance with an embodiment. In the present example, system 20 operates in accordance with Third Generation Partnership Project (3GPP) Long Term Evolution - Advanced (LTE-A) specifications. In alternative embodiments, system 20 may operate in accordance with any other suitable communication protocol in which cells coordinate transmission with one another, such as, for example, WiMAX or Wi-Fi.

In the embodiment of Fig. 1, system 20 comprises a mobile communication terminal 24 (referred to in LTE-A terminology as User Equipment - UE) and three cells 28 (base stations or transmission points) denoted CELL1, CELL2 and CELL3. The terms cell, base station and Transmission Point (TP) are used interchangeably herein. The choice of presenting a single UE and three cells is made purely by way of example. In real-life configurations, system 20 typically comprises a large number of cells, some of which may be collocated, and a large number of terminals. Each UE 24 comprises, for example, a cellular phone, a wireless-enabled computing device or any other suitable type of communication terminal.

Cells 28 cooperate with one another in transmitting precoded (i.e., beamformed) signals to UEs 24. A group of cells that cooperate in this manner, such as CELL1, CELL2 and CELL3, is referred to as a cooperating set. In various embodiments, cells 28 may use CoMP modes such as DPS, DPB, JP, CB, and possibly alternate between different modes over time.

In the present embodiment, system 20 comprises a central scheduler 32, which schedules the transmissions of the various cells to the various UEs, and calculates precoding vectors (i.e., sets of complex weights to be applied to the signals transmitted via the respective transmit antennas of the cells) to be applied by the cells when transmitting the CoMP transmissions. In some embodiments, central scheduler 32 also selects the appropriate CoMP mode.

In the embodiments disclosed herein, central scheduler 32 specifies a channel feedback scheme for obtaining channel feedback from UEs 24. Typically, central scheduler 32 assigns multiple Channel State Information Reference Signal resources (CSI-RS resources) to the cells (TPs). In some embodiments, each TP is assigned a respective different CSI-RS resource. Alternatively, central scheduler 32 may assign a certain CSI-RS resource to two or more TPs.

Each cell (or cells) is configured to transmit respective unique reference signals (referred to as CSI-RS) depending on the assigned CSI-RS resource. UEs 24 typically measure signals and compute channel feedback per CSI-RS resource, regardless of whether the CSI-RS resource corresponds to a single TP or to multiple TPs. Techniques for computing and providing such channel feedback are described in detail below.

In some embodiments, central scheduler 32 comprises an interface 33 for communicating with cells 28, and a processor 34 that carries out the scheduler functions described herein. In alternative embodiments, some or all of the functions of central scheduler 32 are carried out by a processor in one of the cells, or by any other suitable processor. The description that follows refers to the central scheduler 32 as performing these functions, for the sake of clarity. In alternative embodiments, however, the functions of the central scheduler 32 can be carried out using any suitable processor or multiple processors.

In the embodiment of Fig. 1, UE 24 comprises one or more antennas 36, a downlink receiver (DL RX) 40, an uplink transmitter (UL TX) 44, and processing circuitry 48. Receiver 40 receives downlink signals from cells 28 via antennas 36. Processing circuitry 48 processes the signals received by receiver 40. In the present embodiment, processing circuitry 48 comprises a channel signal measurement unit 52, which performs various signal measurements on the received downlink signals.

The signal measurements may comprise, for example, Reference Signal Received Power (RSRP) measurements and CSI measurements. Unit 52 typically performs RSRP and CSI measurements per CSI-RS resource. RSRP measurement typically involves measuring the received power level of one or more of the corresponding CSI-RS. CSI measurement typically involves estimating the channel response for one or more of the corresponding CSI-RS. Typically although not necessarily, cells 28 use the same cell identifier (Cell ID) but different CSI-RS resources.

A feedback calculation module 56 calculates channel feedback based on the measurements carried out by module 52. The channel feedback is provided to UL TX 44 for transmission to scheduler 32 via cells 28. As will be explained in detail below, the channel feedback is assigned for transmission on periodic uplink control channels (e.g., Physical Uplink Control Channels - PUCCH) and/or on a-periodic uplink channels (e.g., Physical Uplink Shared Channels - PUSCH).

The configurations of the UE 24 and central scheduler 32 shown in Fig. 1 are example configurations, which are depicted in a highly simplified manner solely for the sake of clarity. In alternative embodiments, any other suitable configuration for the UE 24 or central scheduler 32 can be used. Elements of the UE 24 and central scheduler 32 that are not mandatory for understanding of the disclosed techniques have been omitted from the figure for the sake of clarity.

In various embodiments, some or all of the elements of UE 24 and central scheduler 32, including receiver 40, transmitter 44, processing circuitry 48, interface 33 and processor 34, are implemented in hardware, such as implementing receiver 40 and/or transmitter 44 using one or more Radio Frequency Integrated Circuits (RFICs), or implementing processing circuitry 48 or processor 34 using one or more Field-Programmable Gate Arrays (FPGAs) or Application-Specific Integrated Circuits (ASICs). In alternative embodiments, certain elements of UE 24 and/or central scheduler 32 are implemented in software, or using a combination of hardware and software elements.

In some embodiments, certain elements of the UE 24 and/or central scheduler 32, such as certain elements of processing circuitry 48 and/or processor 34, are implemented in one or more programmable processors, which are programmed in software to carry out the functions described herein. The software may be downloaded to the processors, in whole or in part, in electronic form, over a network, for example, or the software may, alternatively or additionally, be provided and/or stored on non-transitory tangible media, such as magnetic, optical, or electronic memory.

As explained above, in some embodiments UE 24 measures the CSI-RS for each CSI-RS resource, computes channel feedback per CSI-RS resource based on these signal measurements, and transmits the channel feedback for the various CSI-RS resources over the uplink. The UE sends some of the feedback over PUCCH and some of the feedback over PUSCH. Certain aspects of using PUCCH and PUSCH for feedback reporting are addressed in U.S. Patent Application 13/610,904, entitled "Dynamic Point Selection with Combined PUCCH/PUSCH Feedback," filed September 12, 2012, which is assigned to the assignee of the present patent application.

The PUCCH and PUSCH differ in characteristics. For example, the PUCCH is typically configured semi-statically, and this configuration remains valid for a relatively long time period. PUSCH resources, on the other hand, are typically granted on demand, e.g., via Downlink Control Information (DCI) messages.

In some embodiments, UE 24 is configured with a definition of two subsets of CSI-RS resources. The first subset comprises the CSI-RS resources whose feedback is to be reported over the PUCCH. The second subset comprises the CSI-RS resources whose feedback is to be reported over the PUSCH.

The subsets possibly overlap, i.e., a given CSI-RS resource may appear in both subsets. For such a CSI-RS resource, part of the channel feedback is transmitted over the PUCCH and another part of the channel feedback is transmitted over the PUSCH. The partitioning of the channel feedback to PUCCH and PUSCH typically takes into account the different characteristics of the two types of channels. The various types channel feedback can correspond to, for example, Channel Quality Indicator (CQI) feedback and/or Channel State Information (CSI) feedback. In an example embodiment, CQI feedback comprises a small number of bits but is reported a frequent time intervals. CSI feedback such as Precoding Matrix Indicator (PMI) or Rank Indicator (RI), on the other hand, comprises a large number of bits but may be reported less frequently. Therefore, in an embodiment, the UE reports CQI feedback over PUCCH and CSI feedback over PUSCH.

In the embodiments described herein, the assignment of CSI-RS resources to the two subsets (i.e., the selection of CSI-RS resources whose feedback is to be reported over PUCCH, and CSI-RS resources whose feedback is to be reported over PUSCH) is carried out by central scheduler 32.

In an example embodiment, the central scheduler notifies UE 24 of the assignment by sending a bitmap to the UE 24. Each bit in the bitmap corresponds to a respective CSI-RS resource, and the bit value indicates whether the channel feedback for the corresponding CSI-RS should be reported using PUCCH or PUSCH. Alternatively, any other suitable notification method can be used.

In alternative embodiments, the assignment is carried out by processing circuitry 48 in UE 24. In yet another embodiment, the assignment is carried out jointly by central scheduler 32 and UE 24. In some embodiments, the assignment also specifies how the channel feedback is encoded and sent over the PUCCH and PUSCH.

The assignment of CSI-RS resources to PUCCH and PUSCH, and the type of channel feedback reported over the PUCCH and PUSCH, can be set in various ways. In one embodiment, the UE uses the PUCCH for transmitting channel feedback with low resolution for the various CSI-RS resources. Depending on the feedback reported on PUCCH, the UE transmits refined higher-resolution channel feedback for one or more selected CSI-RS resources over the PUSCH. The selection of CSI-RS resources that require refined channel feedback may also depend on constraints of central scheduler 32, e.g., constraints on precoding spatial directions.

In some embodiments, the channel feedback for different CSI-RS resources comprises different numbers of bits. Typically, central scheduler 32 sets the number of bits in the channel feedback of a given CSI-RS resource depending on the impact of this channel feedback on performance.

Generally, UE 24 may use the PUCCH and PUSCH to transmit any suitable type of channel feedback. Example feedback types comprise Channel Quality Indicator (CQI), Channel State Information (CSI) such as Precoding Matrix Indicator (PMI) or Rank Indicator (RI), and/or interference level feedback. In an embodiment, the UE 24 performs CSI measurements and interference measurements over zero-power CSI-RS, as defined in the LTE specification. Typically, although not necessarily, a single interference measurement resource is used.

Consider the first subset of CSI-RS resources, whose channel feedback is reported over PUCCH. In some embodiments, feedback calculation module 56 in UE 24 encodes the channel feedback for each CSI-RS resource independently of the other CSI-RS resources, and transmitter 44 transmits the channel feedback for each CSI-RS resource in a separate PUCCH transmission.

This sort of independent encoding may use PUCCH reporting modes that are specified in the LTE specifications, for example PUCCH 1-1 sub-modes 1 and 2 or PUCCH 2-1 for channel feedback with RI/PMI, or PUCCH 1-0 or PUCCH 2-0 for channel feedback without RI/PMI. As explained above, the PUCCH modes are typically configured semi-statically. In an embodiment, the appropriate PUCCH mode is defined independently for each CSI-RS resource.

In these embodiments, module 56 typically time-multiplexes the channel feedback of different CSI-RS resources over multiple PUCCH transmissions in a sequence of uplink sub-frames. In some embodiments, module 56 sets the periodicity for each CSI-RS resource (e.g., the time period between successive feedback reports for that CSI-RS resource) independently for each CSI-RS resource.

In alternative embodiments, feedback calculation module 56 jointly encodes the channel feedback for multiple CSI-RS resources in the first subset, and transmitter 44 transmits the jointly-encoded channel feedback in the same PUCCH transmission. Such a scheme can be used, for example, for reporting RI, PMI and/or CQI. Joint encoding typically exploits the similarity between the channel feedback of different CSI-RS resources, to reduce uplink overhead. Module 56 may use any suitable type of joint encoding, such as differential encoding, for this purpose. In some embodiments, module 56 uses joint encoding for feedback modes that do not include PMI, so as to fit within the limited PUCCH capacity.

Consider now the second subset of CSI-RS resources, whose channel feedback is reported over PUSCH. In some embodiments, feedback calculation module 56 produces a PUSCH report that comprises the channel feedback for two or more of the CSI-RS resources in the second subset. In some embodiments module 56 encodes the channel feedback of these multiple CSI-RS resources jointly, e.g., using differential encoding. In other embodiments, module 56 encodes the channel feedback for each CSI-RS resource independently. In either case, transmitter 44 then transmits the PUSCH transmission on the uplink.

In alternative embodiments, module 56 encodes the channel feedback for each CSI-RS resource in a separate PUSCH transmission. This sort of independent encoding may use PUSCH reporting modes that are specified in the LTE specifications, for example PUSCH 1-2, 2-2 and 3-1 for feedback with RI/PMI, or PUSCH 2-0 or 3-0 for feedback without RI/PMI. In another embodiment, a PUCCH mode 3-2 is defined. This mode provides greater frequency resolution in feedback reporting, and therefore better performance and greater flexibility.

Transmitter 44 typically transmits the independently-encoded PUSCH transmissions in a time-multiplexed manner over a sequence of uplink sub-frames. As explained above, the PUCCH transmissions are typically triggered dynamically using DCI uplink grant.

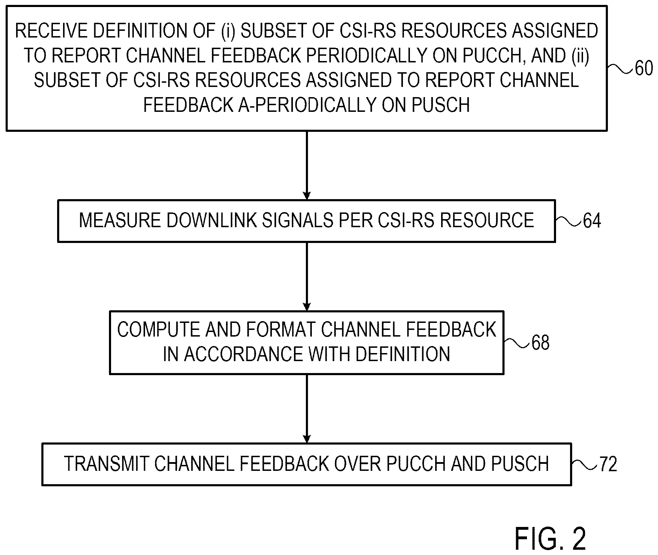

Fig. 2 is a flow chart that schematically illustrates a method for providing channel feedback in system 20, in accordance with an embodiment. The method begins with processing circuitry 48 of UE 24 receiving, using receiver 40, a feedback definition sent from central scheduler 32, at a definition input operation 60. The feedback definition specifies two subsets of CSI-RS resources: a first subset whose channel feedback is to be reported over PUCCH, and a second subset whose channel feedback is to be reported over PUSCH.

In some embodiments the definition also specifies the type of channel feedback that is to be transmitted over PUCCH and the type of channel feedback that is to be transmitted over PUSCH. In some embodiments the definition also specifies how the channel feedback is to be encoded (e.g., independent or joint encoding).

Signal measurement module 52 in processing circuitry 48 measures the downlink signals per CSI-RS resource, at a signal measurement operation 64. Feedback calculation module 56 in processing circuitry 48 computes channel feedback for the various CSI-RS resources based on the corresponding signal measurements, at a feedback computation operation 68. The feedback computation is performed in accordance with the feedback definition provided at operation 60 above. Transmitter 44 transmits the channel feedback over the PUCCH and PUSCH, at a transmission operation 72.

It is noted that the embodiments described above are cited by way of example, and that the present invention is not limited to what has been particularly shown and described hereinabove. Rather, the scope of the present invention includes both combinations and sub-combinations of the various features described hereinabove, as well as variations and modifications thereof which would occur to persons skilled in the art upon reading the foregoing description and which are not disclosed in the prior art.

Further aspects of the present specification relates to one or more of the following clauses.

In some embodiments, a method includes receiving, in a communication terminal, signals from a group of cells. The group of cells cooperates in a Coordinated Multipoint (CoMP) transmission scheme that assigns multiple Channel State Information Reference Signals (CSI-RS) resources to the cells. A first subset of the CSI-RS resources is assigned to periodically report channel feedback on a first uplink channel, and a second subset of the CSI-RS resources is assigned to a-periodically report the channel feedback on a second uplink channel. The channel feedback is computed for the multiple CSI-RS resources. The channel feedback computed for the CSI-RS resources is transmitted in the first subset on the first uplink channel, and the channel feedback computed for the CSI-RS resources in the second subset is transmitted on the second uplink channel.

In an embodiment, computing the channel feedback includes encoding the channel feedback of each CSI-RS resource independently of other CSI-RS resources. In another embodiment, transmitting the channel feedback on the first uplink channel includes multiplexing transmissions of the channel feedback of the CSI-RS resources in the first subset over a sequence of time frames. In yet another embodiment, computing the channel feedback includes defining, for each CSI-RS resource in the first subset and independently of other CSI-RS resources, a respective time periodicity for transmitting the channel feedback on the first uplink channel.

In a disclosed embodiment, computing the channel feedback includes defining a respective feedback reporting mode for each CSI-RS resource, independently of other CSI-RS resources. In an example embodiment, transmitting the channel feedback includes transmitting the channel feedback for two or more of the CSI-RS resources in the second subset in a single transmission of the second uplink channel. In an embodiment, computing the channel feedback includes jointly encoding Channel State Information (CSI) feedback computed for the two or more of the CSI-RS resources, and transmitting the channel feedback includes transmitting the jointly-encoded CSI feedback in the single transmission of the second uplink channel.

In another embodiment, assigning the first subset and the second subset includes assigning at least one of the CSI-RS resources to both the first subset and the second subset. In an embodiment, at least one of the CSI-RS resources is assigned to two or more cells of the group of cells.

In some embodiments, an apparatus includes a receiver, processing circuitry and a transmitter. The receiver is configured to receive signals from a group of cells, wherein the group of cells cooperate in a Coordinated Multipoint (CoMP) transmission scheme that assigns multiple Channel State Information Reference Signals (CSI-RS) resources to the cells. The processing circuitry is configured to assign a first subset of the CSI-RS resources to periodically report channel feedback on a first uplink channel, assign a second subset of the CSI-resources to a-periodically report the channel feedback on an second uplink channel, and compute the channel feedback for the multiple CSI-RS resources. The transmitter is configured to transmit the channel feedback computed for the CSI-RS resources in the first subset on the first uplink channel, and to transmit the channel feedback computed for the CSI-RS resources in the second subset on the second uplink channel.

In an embodiment, the processing circuitry is configured to encode the channel feedback of each CSI-RS resource independently of other CSI-RS resources. In another embodiment, the processing circuitry is configured to multiplex transmissions of the channel feedback of the CSI-RS resources in the first subset over a sequence of time frames on the first uplink channel. In a disclosed embodiment, the processing circuitry is configured to define, for each CSI-RS resource in the first subset and independently of other CSI-RS resources, a respective time periodicity for transmitting the channel feedback on the first uplink channel.

In yet another embodiment, the processing circuitry is configured to define a respective feedback reporting mode for each CSI-RS resource, independently of other CSI-RS resources. In still another embodiment, the transmitter is configured to transmit the channel feedback for two or more of the CSI-RS resources in the second subset in a single transmission of the second uplink channel. In an example embodiment, the processing circuitry is configured to jointly encode Channel State Information (CSI) feedback computed for the two or more of the CSI-RS resources, and the transmitter is configured to transmit the jointly-encoded CSI feedback in the single transmission of the second uplink channel.

In an embodiment, the processing circuitry is configured to assign at least one of the CSI-RS resources to both the first subset and the second subset. In another embodiment, at least one of the CSI-RS resources is assigned to two or more cells of the group of cells. In some embodiments, a mobile communication terminal includes the disclosed apparatus. In some embodiments, a chipset for processing signals in a mobile communication terminal includes the disclosed apparatus.

## Claims

1. A method carried out by a mobile communication terminal (24), comprising:
receiving signals from a group of cells (28), wherein the group of cells cooperate in a Coordinated Multipoint, CoMP, transmission scheme that assigns multiple Channel State Information Reference Signals, CSI-RS, resources to the cells;
assigning, or receiving an assignment (60) of, a first subset of the CSI-RS resources to periodically report channel feedback on a first uplink channel such as PUCCH, and assigning, or receiving an assignment (60) of, a second subset of the CSI-RS resources to a-periodically report the channel feedback on a second uplink channel such as PUSCH;
computing (68) the channel feedback for the multiple CSI-RS resources, wherein computing the channel feedback for the multiple CSI-RS resources comprises computing the channel feedback for at least one of the CSI-RS resources appearing in both the first subset and the second subset, wherein the channel feedback for the at least one of the CSI-RS resources comprises a first type of channel feedback such as CQI and a second type of channel feedback such as CSI, wherein the second type of channel feedback is to be reported less frequently than the first type of channel feedback; and
transmitting (72) the channel feedback computed for the CSI-RS resources in the first subset on the first uplink channel, and transmitting the channel feedback computed for the CSI-RS resources in the second subset on the second uplink channel, wherein for the at least one of the CSI-RS resources appearing in both the first subset and the second subset the first type of channel feedback is transmitted on the first uplink channel and the second type of channel feedback is transmitted on the second uplink channel.

2. The method according to claim 1, wherein computing the channel feedback comprises encoding the channel feedback of each CSI-RS resource independently of other CSI-RS resources.

3. The method according to claim 1 or 2, wherein transmitting the channel feedback on the first uplink channel comprises multiplexing transmissions of the channel feedback of the CSI-RS resources in the first subset over a sequence of time frames.

4. The method according to any of claims 1-3, wherein computing the channel feedback comprises defining, for each CSI-RS resource in the first subset and independently of other CSI-RS resources, a respective time periodicity for transmitting the channel feedback on the first uplink channel.

5. The method according to any of claims 1-4, wherein computing the channel feedback comprises defining a respective feedback reporting mode for each CSI-RS resource, independently of other CSI-RS resources.

6. The method according to any of claims 1-5, wherein transmitting the channel feedback comprises transmitting the channel feedback for two or more of the CSI-RS resources in the second subset in a single transmission of the second uplink channel; and/or computing the channel feedback comprises jointly encoding Channel State Information , CSI, feedback computed for the two or more of the CSI-RS resources, and wherein transmitting the channel feedback comprises transmitting the jointly-encoded CSI feedback in the single transmission of the second uplink channel.

7. The method according to any of claims 1-6, wherein assigning the first subset and the second subset comprises assigning at least one of the CSI-RS resources to both the first subset and the second subset; or
wherein at least one of the CSI-RS resources is assigned to two or more cells of the group of cells.

8. An apparatus for a mobile communication terminal, comprising:
a receiver (40) configured to receive signals from a group of cells, wherein the group of cells cooperate in a Coordinated Multipoint, CoMP, transmission scheme that assigns multiple Channel State Information Reference Signals, CSI-RS, resources to the cells;
processing circuitry (48, 52, 56) configured to:
assign, or receive an assignment (60) of, a first subset of the CSI-RS resources to periodically report channel feedback on a first uplink channel such as PUCCH, assign, or receive an assignment (60) of, a second subset of the CSI-RS resources to a-periodically report the channel feedback on an second uplink channel such as PUSCH, and
compute the channel feedback for the multiple CSI-RS resources, wherein computing the channel feedback for the multiple CSI-RS resources comprises computing the channel feedback for at least one of the CSI-RS resources appearing in both the first subset and the second subset, wherein the channel feedback for the at least one of the CSI-RS resources comprises a first type of channel feedback such as CQI and a second type of channel feedback such as CSI, wherein the second type of channel feedback is to be reported less frequently than the first type of channel feedback; and
a transmitter (44) configured to transmit the channel feedback computed for the CSI-RS resources in the first subset on the first uplink channel, and to transmit the channel feedback computed for the CSI-RS resources in the second subset on the second uplink channel, wherein for the at least one of the CSI-RS resources appearing in both the first subset and the second subset the first type of channel feedback is transmitted on the first uplink channel and the second type of channel feedback is transmitted on the second uplink channel.

9. The apparatus according to claim 8, wherein the processing circuitry is configured to encode the channel feedback of each CSI-RS resource independently of other CSI-RS resources.

10. The apparatus according to claim 8 or 9, wherein the processing circuitry is configured to multiplex transmissions of the channel feedback of the CSI-RS resources in the first subset over a sequence of time frames on the first uplink channel; or
wherein the processing circuitry is configured to define, for each CSI-RS resource in the first subset and independently of other CSI-RS resources, a respective time periodicity for transmitting the channel feedback on the first uplink channel.

11. The apparatus according to any of claims 8-10, wherein the processing circuitry is configured to define a respective feedback reporting mode for each CSI-RS resource, independently of other CSI-RS resources; or
wherein the transmitter is configured to transmit the channel feedback for two or more of the CSI-RS resources in the second subset in a single transmission of the second uplink channel.

12. The apparatus according to claim 11, wherein the processing circuitry is configured to jointly encode Channel State Information, CSI, feedback computed for the two or more of the CSI-RS resources, and wherein the transmitter is configured to transmit the jointly-encoded CSI feedback in the single transmission of the second uplink channel.

13. The apparatus according to any of claims 8-11, wherein the processing circuitry is configured to assign at least one of the CSI-RS resources to both the first subset and the second subset; or
wherein at least one of the CSI-RS resources is assigned to two or more cells of the group of cells.

14. A mobile communication terminal (24) comprising the apparatus of any of claims 8-13.

15. A chipset for processing signals in a mobile communication terminal, the chipset comprising the apparatus of any of claims 8-13.

## Patentansprüche

1. Verfahren, das von einem mobilen Kommunikationsendgerät (24) ausgeführt wird, umfassend:
Empfangen von Signalen von einer Gruppe von Zellen (28), wobei die Gruppe von Zellen in einem koordinierten Mehrpunkt-, CoMP-, Sendeschema kooperiert, das den Zellen mehrere Ressourcen von Kanalzustandsinformations-Referenzsignalen, CSI-RS zuordnet;
Zuweisen oder Empfangen einer Zuweisung (60) eines ersten Teilsatzes der CSI-RS-Ressourcen, um periodisch Kanalrückmeldung auf einem ersten Uplink-Kanal wie PUCCH zu melden, und Zuweisen oder Empfangen einer Zuweisung (60) eines zweiten Teilsatzes der CSI-RS-Ressourcen um a-periodisch die Kanalrückmeldung auf einem zweiten Uplink-Kanal wie PUSCH mitzuteilen;
Berechnen (68) der Kanalrückmeldung für die mehreren CSI-RS-Ressourcen, wobei das Berechnen der Kanalrückmeldung für die mehreren CSI-RS-Ressourcen das Berechnen der Kanalrückmeldung für wenigstens eine der CSI-RS-Ressourcen umfasst, die sowohl in dem ersten Teilsatz als auch in dem zweiten Teilsatz erscheinen, wobei die Kanalrückmeldung für die wenigstens eine der CSI-RS-Ressourcen einen ersten Typ von Kanalrückmeldung, wie CQI, und einen zweiten Typ von Kanalrückmeldung, wie CSI, umfasst, wobei der zweite Typ von Kanalrückmeldung seltener als der erste Typ der Kanalrückmeldung zu melden ist; und
Senden der Kanalrückmeldung, die für die CSI-RS-Ressourcen in dem ersten Teilsatz berechnet wurden, auf dem ersten Uplink-Kanal und Senden der Kanalrückmeldung, die für die CSI-RS-Ressourcen in dem zweiten Teilsatz berechnet wurden, auf dem zweiten Uplink-Kanal, wobei für die wenigstens eine der CSI-RS-Ressourcen, die sowohl in dem ersten Teilsatz als auch in dem zweiten Teilsatz erscheinen, der erste Typ der Kanalrückmeldung auf dem ersten Uplink-Kanal und der zweite Typ der Kanalrückmeldung auf dem zweiten Uplink-Kanal gesendet wird.

2. Verfahren nach Anspruch 1, bei dem das Berechnen der Kanalrückmeldung das Codieren der Kanalrückmeldung jeder CSI-RS-Ressource unabhängig von anderen CSI-RS-Ressourcen umfasst.

3. Verfahren nach Anspruch 1 oder 2, bei dem das Senden der Kanalrückmeldung auf dem ersten Uplink-Kanal das Multiplexieren von Sendungen der Kanalrückmeldung der CSI-RS-Ressourcen in dem ersten Teilsatz über eine Sequenz von Zeitrahmen umfasst.

4. Verfahren nach einem der Ansprüche 1 bis 3, bei dem das Berechnen der Kanalrückmeldung das Definieren einer jeweiligen Zeitperiodizität für das Senden der Kanalrückmeldung auf dem ersten Uplink-Kanal für jede CSI-RS-Ressource in dem ersten Teilsatz und unabhängig von anderen CSI-RS-Ressourcen umfasst.

5. Verfahren nach einem der Ansprüche 1 bis 4, bei dem das Berechnen der Kanalrückmeldung das Definieren eines jeweiligen Rückmeldeberichtsmodus' für jede CSI-RS-Ressource unabhängig von anderen CSI-RS-Ressourcen umfasst.

6. Verfahren nach einem der Ansprüche 1 bis 5, bei dem das Senden der Kanalrückmeldung das Senden der Kanalrückmeldung für zwei oder mehr der CSI-RS-Ressourcen in dem zweiten Teilsatz in einer einzigen Sendung des zweiten Uplink-Kanals umfasst; und/oder
das Berechnen der Kanalrückmeldung das gemeinsame Codieren der Kanalzustandsinformations-, CSI-, Rückmeldung umfasst, die für die zwei oder mehr der CSI-RS-Ressourcen berechnet wurde, und das Senden der Kanalrückmeldung das Senden der gemeinsam codierten CSI-Rückmeldung bei der einzelnen Sendung des zweiten Uplink-Kanals umfasst.

7. Verfahren nach einem der Ansprüche 1 bis 6, bei dem das Zuweisen des ersten Teilsatzes und des zweiten Teilsatzes das Zuweisen von wenigstens einer der CSI-RS-Ressourcen zu sowohl dem ersten Teilsatz als auch dem zweiten Teilsatz umfasst; oder
wenigstens eine der CSI-RS-Ressourcen zwei oder mehr Zellen der Gruppe von Zellen zugewiesen wird.

8. Vorrichtung für ein mobiles Kommunikationsendgerät, umfassend:
einen Empfänger (40), der zum Empfangen von Signalen von einer Gruppe von Zellen eingerichtet ist, wobei die Gruppe von Zellen in einem koordinierten Mehrpunkt-, CoMP-, Sendeschema kooperiert, das den Zellen mehrere Ressourcen von Kanalzustandsinformations-Referenzsignalen, CSI-RS zuordnet;
eine Verarbeitungsschaltung (48, 52, 56), die eingerichtet ist für das:
Zuweisen oder Empfangen einer Zuweisung (60) eines ersten Teilsatzes der CSI-RS-Ressourcen, um periodisch Kanalrückmeldung auf einem ersten Uplink-Kanal wie PUCCH zu melden, und Zuweisen oder Empfangen einer Zuweisung (60) eines zweiten Teilsatzes der CSI-RS-Ressourcen um a-periodisch die Kanalrückmeldung auf einem zweiten Uplink-Kanal wie PUSCH mitzuteilen;
Berechnen der Kanalrückmeldung für die mehreren CSI-RS-Ressourcen, wobei das Berechnen der Kanalrückmeldung für die mehreren CSI-RS-Ressourcen das Berechnen der Kanalrückmeldung für wenigstens eine der CSI-RS-Ressourcen umfasst, die sowohl in dem ersten Teilsatz als auch in dem zweiten Teilsatz erscheinen, wobei die Kanalrückmeldung für die wenigstens eine der CSI-RS-Ressourcen einen ersten Typ von Kanalrückmeldung, wie CQI, und einen zweiten Typ von Kanalrückmeldung, wie CSI, umfasst, wobei der zweite Typ von Kanalrückmeldung seltener als der erste Typ der Kanalrückmeldung zu melden ist; und
einen Sender (44), der dazu eingerichtet ist, die Kanalrückmeldung, die für die CSI-RS-Ressourcen in dem ersten Teilsatz berechnet wurden, auf dem ersten Uplink-Kanal zu senden und die Kanalrückmeldung, die für die CSI-RS-Ressourcen in dem zweiten Teilsatz berechnet wurden, auf dem zweiten Uplink-Kanal zu senden, wobei für die wenigstens eine der CSI-RS-Ressourcen, die sowohl in dem ersten Teilsatz als auch in dem zweiten Teilsatz erscheinen, der erste Typ der Kanalrückmeldung auf dem ersten Uplink-Kanal und der zweite Typ der Kanalrückmeldung auf dem zweiten Uplink-Kanal gesendet wird.

9. Vorrichtung nach Anspruch 8, bei der die Verarbeitungsschaltung dazu eingerichtet ist, die Kanalrückmeldung jeder CSI-RS-Ressource unabhängig von anderen CSI-RS-Ressourcen zu codieren.

10. Vorrichtung nach Anspruch 8 oder 9, bei der die Verarbeitungsschaltung dazu eingerichtet ist, Sendungen der Kanalrückmeldung der CSI-RS-Ressourcen in dem ersten Teilsatz über eine Sequenz von Zeitrahmen auf dem ersten Uplink-Kanal zu multiplexieren; oder
die Verarbeitungsschaltung dazu eingerichtet ist, für jede CSI-RS-Ressource in dem ersten Teilsatz und unabhängig von anderen CSI-RS-Ressourcen eine jeweilige Zeitperiodizität zum Senden der Kanalrückmeldung auf dem ersten Uplink-Kanal zu definieren.

11. Vorrichtung nach einem der Ansprüche 8 bis 10, bei der die Verarbeitungsschaltung dazu eingerichtet ist, einen jeweiligen Rückmeldeberichtsmodus für jede CSI-RS-Ressource unabhängig von anderen CSI-RS-Ressourcen zu definieren: oder
der Sender dazu eingerichtet ist, die Kanalrückmeldung für zwei oder mehr der CSI-RS-Ressourcen in dem zweiten Teilsatz in einer einzigen Sendung des zweiten Uplink-Kanals zu senden.

12. Vorrichtung nach Anspruch 11, bei der die Verarbeitungsschaltung dazu eingerichtet ist, eine Kanalzustandsinformations-, CSI-, Rückmeldung, die für die zwei oder mehr der CSI-RS-Ressourcen berechnet wurde, gemeinsam zu codieren, und der Sender dazu eingerichtet ist, die gemeinsam codierte CSI-Rückmeldung bei der einzelnen Sendung des zweiten Uplink-Kanals zu senden.

13. Vorrichtung nach einem der Ansprüche 8 bis 11, bei der die Verarbeitungsschaltung dazu eingerichtet ist, wenigstens eine der CSI-RS-Ressourcen sowohl dem ersten Teilsatz als auch dem zweiten Teilsatz zuzuweisen; oder
wenigstens eine der CSI-RS-Ressourcen zwei oder mehr Zellen der Gruppe von Zellen zugewiesen ist.

14. Mobilkommunikationsendgerät (24), umfassend die Vorrichtung nach einem der Ansprüche 8 bis 13.

15. Chipsatz zum Verarbeiten von Signalen in einem mobilen Kommunikationsendgerät, wobei der Chipsatz die Vorrichtung nach einem der Ansprüche 8 bis 13 umfasst.

## Revendications

1. Procédé exécuté par un terminal de communication mobile (24), comportant :
la réception des signaux en provenance d'un groupe de cellules (28), où le groupe de cellules coopère selon un schéma de transmission coordonnée à points multiples (CoMP, « Coordinated Multipoint ») qui attribue de multiples ressources de signaux de référence d'informations d'état de canal (CSI-RS, « Channel State Information Reference Signal ») aux cellules ;
l'attribution, ou la réception d'une attribution (60), d'un premier sous-ensemble des ressources CSI-RS pour rapporter périodiquement un retour de canal sur un premier canal en liaison montante tel qu'un canal de commande de liaison montante physique (PUCCH, « Physical Uplink Control Channel »), et l'attribution, ou la réception de l'attribution (60), d'un second sous-ensemble des ressources CSI-RS pour rapporter non-périodiquement le retour de canal sur un second canal en liaison montante tel qu'un canal physique partagé en liaison montante (PUSCH, « Physical Uplink Shared Channel ») ;
le calcul (68) du retour de canal pour les multiples ressources CSI-RS, où le calcul du retour de canal pour les multiples ressources CSI-RS comporte le calcul du retour de canal pour au moins une des ressources CSI-RS apparaissant à la fois dans le premier sous-ensemble et dans le second sous-ensemble, où le retour de canal pour l'au moins une des ressources CSI-RS comporte un premier type de retour de canal tel qu'un indicateur de qualité de canal (CQI, « Channel Quality Indicator ») et un second type de retour de canal tel qu'une information d'état de canal (CSI, « Channel State Information »), où le second type de retour de canal doit être rapporté moins fréquemment que le premier type de retour de canal ; et
la transmission (72) du retour de canal calculé pour les ressources CSI-RS dans le premier sous-ensemble sur le premier canal en liaison montante, et la transmission du retour de canal calculé pour les ressources CSI-RS dans le second sous-ensemble sur le second canal en liaison montante, où pour l'au moins une des ressources CSI-RS apparaissant à la fois dans le premier sous-ensemble et le second sous-ensemble, le premier type de retour de canal est transmis sur le premier canal en liaison montante et le second type de retour de canal est transmis sur le second canal en liaison montante.

2. Procédé selon la revendication 1, où le calcul du retour de canal comporte l'encodage du retour de canal de chaque ressource CSI-RS indépendamment des autres ressources CSI-RS.

3. Procédé selon la revendication 1 ou 2, où la transmission du retour de canal sur le premier canal en liaison montante comporte le multiplexage des transmissions du retour de canal des ressources CSI-RS dans le premier sous-ensemble sur une séquence de périodes de temps.

4. Procédé selon l'une quelconque des revendications 1 à 3, où le calcul du retour de canal comporte la définition pour chaque ressource CSI-RS dans le premier sous-ensemble, et indépendamment des autres ressources CSI-RS, d'une périodicité respective pour transmettre le retour de canal sur le premier canal en liaison montante.

5. Procédé selon l'une quelconque des revendications 1 à 4, où le calcul du retour de canal comporte la définition d'un mode de rapport de retour respectif pour chaque ressource CSI-RS, indépendamment des autres ressources CSI-RS.

6. Procédé selon l'une quelconque des revendications 1 à 5, où la transmission du retour de canal comporte la transmission du retour de canal pour deux ou plus des ressources CSI-RS dans le second sous-ensemble en une seule transmission sur le second canal en liaison montante ; et/ou
le calcul du retour de canal comporte l'encodage commun du retour d'information d'état de canal (CSI) calculé pour les deux ou plus ressources CSI-RS, et où la transmission du retour de canal comporte la transmission du retour CSI conjointement encodé dans l'unique transmission du second canal en liaison montante.

7. Procédé selon l'une quelconque des revendications 1 à 6, où l'attribution du premier sous-ensemble et du second sous-ensemble comporte l'attribution d'au moins une des ressources CSI-RS à la fois au premier sous-ensemble et au second sous-ensemble ; ou où au moins une des ressources CSI-RS est attribuée à deux ou plus cellules du groupe de cellules.

8. Appareil pour un terminal de communication mobile, comportant :
un récepteur (40) configuré pour recevoir des signaux en provenance d'un groupe de cellules, où le groupe de cellules coopère selon un schéma de transmission coordonnée à points multiples (CoMP, « Coordinated Multipoint ») qui attribue de multiples ressources de signaux de référence d'informations d'état de canal (CSI-RS, « Channel State Information Reference Signal ») aux cellules ;
un circuit de traitement (48, 52, 56) configuré pour :
attribuer, ou recevoir une attribution (60), d'un premier sous-ensemble des ressources CSI-RS pour rapporter périodiquement un retour de canal sur un premier canal en liaison montante tel qu'un PUCCH, et attribuer, ou recevoir une attribution (60), d'un second sous-ensemble des ressources CSI-RS pour rapporter non-périodiquement le retour de canal sur un second canal en liaison montante tel qu'un PUSCH ;
calculer le retour de canal pour les multiples ressources CSI-RS, où le calcul du retour de canal pour les multiples ressources CSI-RS comporte le calcul du retour de canal pour au moins une des ressources CSI-RS apparaissant à la fois dans le premier sous-ensemble et dans le second sous-ensemble, où le retour de canal pour l'au moins une des ressources CSI-RS comporte un premier type de retour de canal tel qu'un CQI et un second type de retour de canal tel qu'une CSI, où le second type de retour de canal doit être rapporté moins fréquemment que le premier type de retour de canal ; et
un transmetteur (44) configuré pour transmettre le retour de canal calculé pour les ressources CSI-RS dans le premier sous-ensemble sur le premier canal en liaison montante, et pour transmettre le retour de canal calculé pour les ressources CSI-RS dans le second sous-ensemble sur le second canal en liaison montante, où pour l'au moins une des ressources CSI-RS apparaissant à la fois dans le premier sous-ensemble et le second sous-ensemble, le premier type de retour de canal est transmis sur le premier canal en liaison montante et le second type de retour de canal est transmis sur le second canal en liaison montante.

9. Appareil selon la revendication 8, où le circuit de traitement est configuré pour encoder le retour de canal de chaque ressource CSI-RS indépendamment des autres ressources CSI-RS.

10. Appareil selon la revendication 8 ou 9, où le circuit de traitement est configuré pour multiplexer les transmissions du retour de canal des ressources CSI-RS dans le premier sous-ensemble sur une séquence de périodes de temps sur le premier canal en liaison montante ; ou
où le circuit de traitement est configuré pour définir, pour chaque ressource CSI-RS dans le premier sous-ensemble et indépendamment des autres ressources CSI-RS, une périodicité respective pour transmettre le retour de canal sur le premier canal en liaison montante.

11. Appareil selon l'une quelconque des revendications 8 - 10, où le circuit de traitement est configuré pour définir un mode de rapport de retour respectif pour chaque ressource CSI-RS, indépendamment des autres ressources CSI-RS ; ou
où le transmetteur est configuré pour transmettre le retour de canal pour deux ou plus des ressources CSI-RS dans le second sous-ensemble en une seule transmission sur le second canal en liaison montante.

12. Appareil selon la revendication 11, où le circuit de traitement est configuré pour encoder conjointement le retour d'information d'état de canal (CSI) calculé pour les deux ou plus ressources CSI-RS, et où le transmetteur est configuré pour transmettre le retour de canal CSI conjointement encodé dans l'unique transmission du second canal en liaison montante.

13. Appareil selon l'une quelconque des revendications 8 - 11, où le circuit de traitement est configuré pour attribuer au moins une des ressources CSI-RS à la fois au premier sous-ensemble et au second sous-ensemble ; ou
où au moins une des ressources CSI-RS est attribuée à deux ou plus cellules du groupe de cellules.

14. Terminal de communication mobile (24) comportant l'appareil selon l'une quelconque des revendications 8-13.

15. Chipset pour le traitement de signaux dans un terminal de communication mobile, le chipset comportant l'appareil selon l'une quelconque des revendications 8-13.
